# EUROPÄISCHE PATENTANMELDUNG

(11) **EP 3 114 933 A1**
(43) Veröffentlichungstag der Anmeldung: **11.01.2017**
(21) Anmeldenummer: 16177952.5
(22) Anmeldetag: 05.07.2016
(51) Int. Cl.: A01N 25/10, A01N 43/40, C08G 81/02, C08G 83/00, C11D 3/00

(54) **STERN-BLOCK-KAMM-POLYMERE ALS BIOAKTIVE TRÄGERMATRICES FÜR DIE WIRKSTOFFFREISETZENDE SEMIPERMANENTE BESCHICHTUNG VON OBERFLÄCHEN**

(30) Priorität: 06.07.2015 DE 102015212611
(71) Anmelder: Henkel AG & Co. KGaA, 40589 Düsseldorf (DE)
(72) Erfinder: WEIDE, Mirko, 40223 Düsseldorf (DE); TILLER, Jörg C., 58313 Herdecke (DE); SIEDENBIEDEL, Felix, 44225 Dortmund (DE); MOLL, Thorsten, 44149 Dortmund (DE)

(57) **Zusammenfassung**

Stern-Block-Kamm-Polymere mit einem hydrophoben Bereich aus hyperverzweigtem Kern und aufgepfropftem hydrophobem Block sowie einem hydrophilen Bereich aus an diesem Block durch nachträgliche Modifizierung angebrachte Seitenketten aus hydrophilem Polymer können zur Behandlung und/oder antimikrobiellen und/oder anti-adhäsiven Ausrüstung von Oberflächen verwendet werden.

## Beschreibung

Pathogene Mikroorganismen stellen ein potentielles Infektionsrisiko dar. Darüber hinaus verursachen viele Mikroorganismen unangenehme Gerüche und unerwünschte sichtbare Beläge, sogenannte Biofilme, auf Oberflächen. Aus diesem Grund werden auch in privaten Haushalten häufig Reinigungsmittel eingesetzt, die mit antimikrobiellen Zusätzen ausgerüstet sind. Diese Desinfektionsmittel bzw. die in ihnen enthaltenen Biozide werden jedoch in der Regel nach ihrer Applikation zusammen mit dem Reinigungsmittel wieder von der behandelten Oberfläche abgewaschen, so dass ihre Wirkung auf die Dauer der Reinigung beschränkt ist. Es ist jedoch wünschenswert, auf den behandelten Oberflächen einen länger anhaltenden antimikrobiellen Effekt zu bewirken.

Ein möglicher Ansatz zur Lösung dieses Problems könnte darin bestehen, die betreffenden Oberflächen, etwa durch kovalente Bindung antimikrobieller Substanzen, permanent antimikrobiell auszurüsten. Eine solche permanente Ausrüstung ist jedoch in der Regel, wenn überhaupt, dann nur sehr schwer durchzuführen. Daher war es eine Aufgabe der vorliegenden Erfindung, Wirkstoffe zur Verfügung zu stellen, die eine länger anhaltende bzw. semipermanente hygienische Ausrüstung von Oberflächen erlauben und sich hierzu in herkömmliche Wasch- und Reinigungsmittel einarbeiten lassen.

Der Einsatz hyperverzweigter Blockcopolymere mit einem hydrophoben Kern und einer antimikrobiell wirksamen Schale zur semipermanenten hygienischen Ausrüstung von Oberflächen wurde bereits beschrieben. Diese Polymere waren jedoch nicht in allen Fällen optimal einarbeitbar. Bisherige Reinigungsmittel konnten zudem die enthaltenen Wirkstoffe nicht langsam von der Oberfläche freisetzen, so dass weiterhin ein Bedarf nach Inhaltsstoffen bestand, die diese Defizite nicht aufweisen.

Überraschend wurde gefunden, dass Stern-Block-Kamm (SBK)-Polymere mit einem hyperverzweigten Kern, einem aufgepfropften hydrophoben und daran anschließenden chemisch modifizierbaren Block, an den als Seitenketten durch nachträgliche Modifizierung ein hydrophiles Polymer angebracht ist, sich hervorragend zur Lösung dieser Aufgabe eignen..

Ein erster Gegenstand der vorliegenden Erfindung ist daher ein Stern-Block-Kamm-Polymer, das einen hydrophoben Bereich aus einem hyperverzweigten Kern und einem aufgepfropften hydrophoben Block sowie einen hydrophilen Bereich aus an diesem Block durch nachträgliche Modifizierung angebrachte Seitenketten aus hydrophilem Polymer umfasst.

Unter "Kern" ist erfindungsgemäß das Innere des hyperverzweigten Polymers gemeint. Der Kern in diesem Sinne umfasst zum einen den hyperverzweigten Kern im eigentlichen Sinne, also denjenigen Bereich, der als Keimzelle für die Ausbildung des hyperverzweigten Polymers dient. Der hydrophobe Bereich des hyperverzweigten Polymers befindet sich nun nicht nur im hyperverzweigten Kern, sondern darüber hinaus in den sich unmittelbar daran anschließenden Bereichen der Äste, die vom aufgepfropften hydrophoben Block herrühren.

Unter "Schale" ist nun ein Bereich zu verstehen, der sich von innen nach außen an den Kern des Polymers anschließt. Die Schale wird entsprechend ausgebildet durch antimikrobiell wirksame Bereiche, die sich auf den Ästen des hyperverzweigten Polymers befinden. Die antimikrobiell wirksame Schale schließt sich nicht direkt an den hyperverzweigten Kern an, sondern ist weiter außen auf dem hyperverzweigten Polymer lokalisiert, da sich an den hyperverzweigten Kern zunächst weitere hydrophobe Bereiche anschließen.

In einer erfindungsgemäß bevorzugten Ausführungsform enthält der hydrophobe Kern aromatische Reste C₆₋₁₀-Aryl, insbesondere Phenyl. In einer besonderen Ausführungsform enthält hierbei nur der hyperverzweigte Kern C₆₋₁₀-Arylreste. Damit die Hydrophobizität des Moleküls ausreichend ist, sollte in dieser Ausführungsform die Anzahl der im Kern enthaltenen hydrophoben aromatischen Reste vorzugsweise mindestens 15 oder 20, besonders bevorzugt mindestens 30, 40 oder 50, vor allem mindestens 100, 120 oder 150, betragen. Der hyperverzweigte Kern kann stattdessen jedoch auch aus einem Silikon, Polyacrylat oder Polymethacrylat bestehen.

An den hydrophoben Kern schließt sich der hydrophobe Block an, bei dem es sich vorzugsweise um hydrophobe Kohlenwasserstoffe, die gegebenenfalls auch Heteroatome enthalten können, handelt. Bei dem hydrophoben Kohlenwasserstoff kann es sich beispielsweise um ein gegebenenfalls substituiertes Polyacrylat oder Polymethacrylat handeln. In einer bevorzugten Ausführungsform werden jedoch Polystyrolblöcke aufgepfropft. Wie dargelegt, erstreckt sich der hydrophobe Bereich auf den hyperverzweigten Kern und darüber hinaus auch in die Äste des Polymers. Der hydrophobe Bereich besteht vorzugsweise aus Monomeren, die blockartig aneinander gereiht sind.

In einer besonderen Ausführungsform sind an den hydrophoben Kern des hyperverzweigten Polymers Äste gebunden, die selbst hydrophobe Bereiche mit aromatischen Resten C₆₋₁₀-Aryl umfassen, an die sich von innen nach außen antimikrobiell und/oder anti-adhäsiv wirksame Bereiche anschließen. Bei den hydrophoben Bereichen in den Ästen handelt es sich hierbei vorzugsweise um polymere Einheiten aus mindestens 10 oder 20, vorzugsweise mindestens 30, 40 oder 50, besonders bevorzugt mindestens 70, 100 oder 150, insbesondere aus 10 bis 5000, 50 bis 3000 oder 100 bis 2000, blockartig angeordneten Monomeren. Die aromatischen Reste können gegebenenfalls auch ein- oder mehrfach substituiert sein, insbesondere durch hydrophobe Gruppen, vor allem durch C₁₋₆-Alkyl. Als aromatische Reste sind Phenyl-Reste bevorzugt. Die hydrophoben Bereiche der Äste bestehen in einer bevorzugten Ausführungsform aus gegebenenfalls modifizierten Polystyrol-Einheiten der zuvor angegebenen Monomeren-Zahl, so dass der hydrophobe Bereich insbesondere ein im Kern hyperverzweigtes Polystyrolsternpolymer ist.

Der antimikrobiell und/oder gegenüber Mikroorganismen anti-adhäsiv wirksame Bereich des hyperverzweigten Polymers stellt vorzugsweise die äußere Schale des Polymers dar. Dieser Bereich ist vorzugsweise hydrophil und ermöglicht dadurch die Löslichkeit des Polymers in wässrigem Medium. Die antimikrobiell und/oder anti-adhäsiv wirksamen Bereiche werden vorzugsweise ebenfalls durch blockartig angeordnete Monomere ausgebildet, wobei dieser Block chemisch modifizierbar ist und an den Block als Seitenketten durch nachträgliche Modifizierung ein hydrophiles Polymer angebracht ist ("Kamm-Polymer"). "Anti-adhäsiv" im Sinne der vorliegenden Erfindung bedeutet insbesondere, dass die Polymere die Anhaftung von Mikroorganismen, vorzugsweise von Bakterien und/oder Pilzen, verhindern.

Falls es sich bei dem antimikrobiell und/oder gegenüber Mikroorganismen anti-adhäsiv wirksamen Bereich des hyperverzweigten Polymers um eine polymere Einheit handelt, so besteht diese vorzugsweise aus mindestens 20, 30, 40 oder 80, vorzugsweise mindestens 120, 160 oder 200, besonders bevorzugt mindestens 280, 400 oder 600, insbesondere aus 40 bis 20000, 200 bis 12000 oder 400 bis 8000, gegebenenfalls chemisch modifizierten blockartig angeordneten Monomeren. Bei den gegebenenfalls chemisch modifizierten blockartig angeordneten Monomeren handelt es sich nach dem zuvor Gesagten vorzugsweise um Einheiten, die eine Gruppe mit einem alkylierten positiv geladenen Heteroatom umfassen, wobei die Gruppen mit einem alkylierten positiv geladenen Heteroatom vorzugsweise ausgewählt sind aus quaternären Ammoniumionen, quaternären Pyridiniumionen, quaternären Phosphoniumionen und ternären Sulfoniumionen. Bei der quaternierenden bzw. ternierenden Gruppe handelt es sich hierbei vorzugsweise um C₁₋₁₂-Alkyl, besonders bevorzugt um C₁₋₆-Alkyl. Es handelt sich also bei den antimikrobiellen und/oder anti-adhäsiv wirksamen polymeren Einheiten vorzugsweise um Polykationen, insbesondere um Heteroatom-Polykationen. In einer bevorzugten Ausführungsform handelt es sich bei den antimikrobiell und/oder gegenüber Mikroorganismen anti-adhäsiv wirksamen Einheiten um durch C₁₋₁₂-Alkyl, insbesondere durch C₁₋₆-Alkyl, vorzugsweise durch Methyl, Ethyl, Propyl oder Butyl zumindest teilweise quaternisierte Polyvinylpyridine, insbesondere Poly-4-vinylpyridine, oder Stickstoffgruppen tragende Poly(m)ethacrylate. Quaternisierte Poly-4-vinylpyridine sind hierbei bevorzugt, wobei auf einen ausreichenden Quaternisierungsgrad geachtet werden muss, damit die antimikrobiellen Eigenschaften zum Tragen kommen. Liegen die N.Alkylpyridiniumreste auf dem Polymerrücken zu weit auseinander, kann sich diese Wirkung nicht entfalten.
Erfindungsgemäße SBK-Polymere können weiterhin durch Aufpfropfen von Methoxy-PEG-Polymeren auf ein Polystyrol-block-Poly-4-Vinylpyridin erhalten werden. PEG steht hierbei für Polyethylenglykol. Dies erfolgt beispielsweise durch Umsetzung mit α-Methoxy-ω-Mesyl-PEG.

Das Verhältnis zwischen der Anzahl an Monomeren im antimikrobiell und/oder anti-adhäsiv wirksamen Bereich zu der Anzahl an Monomeren im hydrophoben Bereich beträgt vorzugsweise mindestens 2:1, besonders bevorzugt mindestens 3:1, insbesondere mindestens 4 : 1 oder 5 : 1 und in besonderen Ausführungsformen mindestens 6 : 1 oder 8:1, wobei die Obergrenze vorzugsweise bei 100 : 1, besonders bevorzugt bei 50:1, vor allem bei 30 : 1, insbesondere bei 25 : 1 liegt. In einer besonders bevorzugten Ausführungsform liegt das Verhältnis zwischen 10 : 1 und 30 : 1, insbesondere zwischen 15:1 und 25 : 1.

Das SBK-Polymer umfasst vorzugsweise mindestens 3, insbesondere 3 bis 10000, besonders bevorzugt 3 bis 1000, insbesondere 3 bis 100 oder 3 bis 10, Äste. Bei dem hyperverzweigten Polymer kann es sich um ein Dendrimer handeln, in einer bevorzugten Ausführungsform handelt es sich jedoch um ein hyperverzweigtes Polymer mit einem geringeren Verzweigungsgrad. In einer besonders bevorzugten Ausführungsform ist nur der hyperverzweigte Kern verzweigt, während die Äste, die am hyperverzweigten Kern ansetzen, linear sind. Der Verzweigungsgrad des hyperverzweigten Kerns beträgt vorzugsweise von 0,4 bis 0,8, besonders bevorzugt von 0,4 bis 0,5. (Hinsichtlich der Definition des Verzweigungsgrades siehe etwa Hölter et al. (1997) Acta Polymer. 48, 30-35.) Bei den Ästen, die am hyperverzweigten Kern ansetzen, handelt es sich, wie bereits ausgeführt, vorzugsweise um Blockcopolymer-Einheiten. Das Molekulargewicht des hyperverzweigten Polymers beträgt in einer bevorzugten Ausführungsform von 40.000 bis 200.000 g/mol.

Bei dem erfindungsgemäßen SBK-Polymer handelt es sich ferner vorzugsweise um ein wasserlösliches Molekül, das insbesondere auch in Gegenwart von Tensiden in wässriger Umgebung stabil solubilisiert werden kann. Überraschenderweise trifft dies insbesondere auch für erfindungsgemäße hyperverzweigte Polymere mit kationisch geladener Schale in Gegenwart von anionischen Tensiden zu, obwohl Polymere mit kationischen Gruppen in der Regel in Gegenwart anionischer Tenside ausfallen.

Ein weiterer besonderer Vorteil der erfindungsgemäßen SBK-Polymere ist die Tatsache, dass sie als Carrier insbesondere für hydrophobe Substanzen dienen können. Als Beispiele für solche Substanzen seien Biozide, insbesondere Triclosan, Farbstoffe und Duftstoffe genannt. Gegenstand der vorliegenden Erfindung sind daher ebenso erfindungsgemäße SBK-Polymere, enthaltend nicht-kovalent gebundene Wirkstoffe, wobei die Wirkstoffe vorzugsweise ausgewählt sind aus Bioziden, Farbstoffen und Duftstoffen.

Die SBK-Polymere können ausgehend von einem hyperverzweigten Kern mit mehreren lebenden Zentren insbesondere durch anionische, kationische oder radikalische Blockcopolymerisation entsprechend literaturbekannter Methoden erhalten werden. Der hyperverzweigte Kern selbst kann ebenfalls durch Polymerisation erhalten werden.

Ein weiterer Gegenstand der vorliegenden Erfindung ist ein Verfahren zur Herstellung eines erfindungsgemäßen antimikrobiell und/oder anti-adhäsiv wirksamen Stern-Block-Kamm-Polymers, umfassend die Schritte:
a) Herstellung eines hyperverzweigten Kerns,
b) Umsetzung der Verbindung gemäß (a) mit Monomeren, die organisch gebundenen Stickstoff, Phosphor oder Schwefel enthalten, vorzugsweise mit 4-Vinylpyridin,
c) Quaternisierung bzw. Ternisierung des Produkts aus (b) durch Umsetzung mit einem Alkylierungs-Reagens, wobei es sich bei dem Alkylierungs-Reagens vorzugsweise um ein Alkylhalogenid, insbesondere um ein Alkylchlorid, -bromid oder-iodid, besonders bevorzugt um ein C₁₋₆-Alkylhalogenid, vor allem um ein C₁₋₄-Alkylhalogenid, handelt, oder durch Umsetzung mit PEG-Derivaten, insbesondere mit α-Methoxy-ω-Mesyl-PEG.

Gegenstand der vorliegenden Erfindung sind ebenso Stern-Block-Kamm-Polymere, die durch das zuvor genannte Verfahren erhältlich sind.

Ein weiterer Gegenstand der vorliegenden Erfindung ist die Verwendung der erfindungsgemäßen SBK-Polymere zur Behandlung und/oder antimikrobiellen Ausrüstung von Oberflächen. Bei der Oberfläche kann es sich hierbei um jede beliebige Oberfläche handeln. In Betracht kommen vor allem hydrophobe Oberflächen, ebenso können jedoch auch hydrophile bzw. positiv oder negativ geladene Oberflächen oder metallische Oberflächen mit erfindungsgemäßen SBK-Polymeren behandelt und/oder ausgerüstet werden. Als Beispiele für behandelbare Oberflächen seinen insbesondere Oberflächen im Haushalt, Textilien, insbesondere aus synthetischem Material, das Haar oder die Zahnoberfläche genannt. Als Beispiele für behandelbare Materialien seien insbesondere Keramik- und Kunststoffoberflächen sowie Holz und Metalle genannt.
Entsprechend sind die erfindungsgemäßen SBK-Polymere vorzugsweise in Mitteln zur Reinigung von Oberflächen, insbesondere harter Oberflächen, insbesondere in maschinellen oder Handgeschirrspülmitteln, in Waschmitteln oder sonstigen Reinigungsmitteln, in Haarbehandlungsmitteln, insbesondere in Shampoos, oder in Zahnbehandlungsmitteln, insbesondere in Zahnpasten, enthalten.

Weiterer Gegenstand der vorliegenden Erfindung ist daher die Verwendung der erfindungsgemäßen SBK-Polymere in einem Reinigungsmittel, insbesondere in einem Mittel zur Reinigung harter Oberflächen, insbesondere in maschinellen oder Handgeschirrspülmitteln, in Waschmitteln oder sonstigen Reinigungsmitteln, in Haarbehandlungsmitteln, insbesondere in Shampoos, oder in Zahnbehandlungsmitteln, insbesondere in Zahnpasten.

Weiterer Gegenstand der vorliegenden Erfindung sind daher auch Zusammensetzungen, insbesondere Reinigungs- und/oder Ausrüstungsmittel, insbesondere Mittel zur Reinigung und/oder Ausrüstung harter Oberflächen, insbesondere ein maschinelles oder Handgeschirrspülmittel, ein Waschmittel oder ein sonstiges Reinigungsmittel, des Weiteren Haarbehandlungsmittel, insbesondere ein Shampoo, sowie Zahnbehandlungsmittel, insbesondere eine Zahnpasta, enthaltend erfindungsgemäße SBK-Polymere. Bei dem Reinigungs- und/oder Ausrüstungsmittel handelt es sich vorzugsweise um ein flüssiges, gelförmiges oder pastöses wässriges Reinigungsmittel.

Erfindungsgemäße Zusammensetzungen enthalten die erfindungsgemäßen SBK-Polymere vorzugsweise in Mengen von bis zu 20 Gew.-%, insbesondere in Mengen von 0,01 bis 10,0 Gew.-%, besonders bevorzugt in Mengen von 0,1 bis 3,0 Gew.-%.

Bei der erfindungsgemäßen Zusammensetzung handelt es sich in einer bevorzugten Ausführungsform um ein Reinigungsmittel für harte Oberflächen oder um ein Waschmittel für Textilien. Diese beiden Ausführungsformen werden daher im Folgenden näher ausgeführt. Die im Folgenden genannten Komponenten können natürlich aber auch in anderen erfindungsgemäßen Zusammensetzungen enthalten sein.

Bei den erfindungsgemäßen Wasch- und Reinigungsmitteln kann es sich um alle denkbaren Reinigungsmittelarten handeln, sowohl um Konzentrate als auch um unverdünnt anzuwendende Mittel, zum Einsatz im kommerziellen Maßstab, in der Waschmaschine oder bei der Hand-Wäsche, beziehungsweise -Reinigung. Dazu gehören beispielsweise Waschmittel für Textilien, Teppiche oder Naturfasern, für die nach der vorliegenden Erfindung die Bezeichnung Waschmittel verwendet wird. Dazu gehören beispielsweise auch Geschirrspülmittel für Geschirrspülmaschinen oder manuelle Geschirrspülmittel oder Reiniger für harte Oberflächen wie Metall, Glas, Porzellan, Keramik, Kacheln, Stein, lackierte Oberflächen, Kunststoffe, Holz oder Leder; für solche wird nach der vorliegenden Erfindung die Bezeichnung Reinigungsmittel verwendet. Im weiteren Sinne sind auch Sterilisations- und Desinfektionsmittel als Wasch- und Reinigungsmittel im erfindungsgemäßen Sinne anzusehen.
Ausführungsformen der vorliegenden Erfindung umfassen alle nach den Stand der Technik etablierten und/oder alle zweckmäßigen Darreichungsformen der erfindungsgemäßen Wasch- oder Reinigungsmittel. Dazu zählen beispielsweise feste, pulverförmige, flüssige, gelförmige oder pastöse Mittel, gegebenenfalls auch aus mehreren Phasen, komprimiert oder nicht komprimiert; ferner gehören beispielsweise dazu: Extrudate, Granulate, Tabletten oder Pouches, sowohl in Großgebinden als auch portionsweise abgepackt.

Neben erfindungsgemäßen SBK-Polymeren enthält ein erfindungsgemäßes Wasch- oder Reinigungsmittel gegebenenfalls weitere Inhaltsstoffe wie Tenside, z. B. nichtionische, anionische und/oder amphotere Tenside, und/oder Enzyme, und/oder Bleichmittel, und/oder Builder, sowie gegebenenfalls weitere übliche Inhaltsstoffe, die im Folgenden ausgeführt werden.

Als nichtionische Tenside werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann, beziehungsweise lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂₋₁₄-Alkohole mit 3 EO oder 4 EO, C₉₋₁₁-Alkohol mit 7 EO, C₁₃₋₁₅-Alkohole mit 3 EO, 5 EO, 7 EO oder 8 EO, C₁₂₋₁₈-Alkohole mit 3 EO, 5 EO oder 7 EO und Mischungen aus diesen, wie Mischungen aus C₁₂₋₁₄-Alkohol mit 3 EO und C₁₂₋₁₈-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Eine weitere Klasse von nichtionischen Tensiden, die vorteilhafterweise eingesetzt werden kann, sind die Alkylpolyglycoside (APG). Einsetzbare Alkypolyglycoside genügen der allgemeinen Formel RO(G)_{z}, in der R einen linearen oder verzweigten, insbesondere in 2-Stellung methylverzweigten, gesättigten oder ungesättigten, aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Glycosylierungsgrad z liegt dabei zwischen 1,0 und 4,0, vorzugsweise zwischen 1,0 und 2,0 und insbesondere zwischen 1,1 und 1,4. Bevorzugt eingesetzt werden lineare Alkylpolyglucoside, also Alkylpolyglycoside, in denen der Polyglycosylrest ein Glucoserest und der Alkylrest ein n-Alkylrest ist.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Der Anteil dieser nichtionischen Tenside liegt vorzugsweise nicht über dem der ethoxylierten Fettalkohole, insbesondere bei nicht mehr als der Hälfte davon. Weiterhin sind auch Polyhydroxyfettsäureamide geeignet.

Als anionische Tenside werden beispielsweise solche vom Typ der Sulfonate und Sulfate eingesetzt. Als Tenside vom Sulfonat-Typ kommen dabei vorzugsweise C₉₋₁₃-Alkylbenzolsulfonate, Olefinsulfonate, das heißt Gemische aus Alken- und Hydroxyalkansulfonaten sowie Disulfonaten, wie man sie beispielsweise aus C₁₂₋₁₈-Monoolefinen mit end- oder innenständiger Doppelbindung durch Sulfonieren mit gasförmigem Schwefeltrioxid und anschließende Alkalische oder saure Hydrolyse der Sulfonierungsprodukte erhält, in Betracht. Geeignet sind auch Alkansulfonate, die aus C₁₂₋₁₈-Alkanen beispielsweise durch Sulfochlorierung oder Sulfoxidation mit anschließender Hydrolyse beziehungsweise Neutralisation gewonnen werden. Ebenso sind auch die Ester von α-Sulfofettsäuren (Estersulfonate), zum Beispiel die α-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die C₁₂-C₁₆-Alkylsulfate und C₁₂-C₁₅-Alkylsulfate sowie C₁₄-C₁₅-Alkylsulfate bevorzugt. Auch 2,3-Alkylsulfate sind geeignete Aniontenside.

Auch die Schwefelsäuremonoester der mit 1 bis 6 Mol Ethylenoxid ethoxylierten geradkettigen oder verzweigten C₇₋₂₁-Alkohole, wie 2-Methyl-verzweigte C₉₋₁₁-Alkohole mit im Durchschnitt 3,5 Mol Ethylenoxid (EO) oder C₁₂₋₁₈-Fettalkohole mit 1 bis 4 EO, sind geeignet. Sie werden in Reinigungsmitteln aufgrund ihres hohen Schaumverhaltens nur in relativ geringen Mengen, beispielsweise in Mengen bis 5 Gew.-%, üblicherweise von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈₋₁₈-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe oben). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, zum Beispiel Kokos-, Palmkern- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Die Tenside können in den erfindungsgemäßen Reinigungs- oder Waschmitteln insgesamt in einer Menge von vorzugsweise 5 Gew.-% bis 50 Gew.-%, insbesondere von 8 Gew.-% bis 30 Gew.-%, bezogen auf das fertige Mittel, enthalten sein.

Erfindungsgemäße Wasch- oder Reinigungsmittel können Bleichmittel enthalten. Unter den als Bleichmittel dienenden, in Wasser H₂O₂ liefernden Verbindungen haben das Natriumpercarbonat, das Natriumperborattetrahydrat und das Natriumperboratmonohydrat besondere Bedeutung. Weitere brauchbare Bleichmittel sind beispielsweise Peroxopyrophosphate, Citratperhydrate sowie H₂O₂ liefernde persaure Salze oder Persäuren, wie Persulfate beziehungsweise Perschwefelsäure. Brauchbar ist auch das Harnstoffperoxohydrat Percarbamid, das durch die Formel H₂N-CO-NH₂·H₂O₂ beschrieben werden kann. Insbesondere beim Einsatz der Mittel für das Reinigen harter Oberflächen, zum Beispiel beim maschinellen Geschirrspülen, können sie gewünschtenfalls auch Bleichmittel aus der Gruppe der organischen Bleichmittel enthalten, obwohl deren Einsatz prinzipiell auch bei Mitteln für die Textilwäsche möglich ist. Typische organische Bleichmittel sind die Diacylperoxide, wie zum Beispiel Dibenzoylperoxid. Weitere typische organische Bleichmittel sind die Peroxysäuren, wobei als Beispiele besonders die Alkylperoxysäuren und die Arylperoxysäuren genannt werden. Bevorzugte Vertreter sind die Peroxybenzoesäure und ihre ringsubstituierten Derivate, wie Alkylperoxybenzoesäuren, aber auch Peroxy-α-Naphthoesäure und Magnesiummonoperphthalat, die aliphatischen oder substituiert aliphatischen Peroxysäuren, wie Peroxylaurinsäure, Peroxystearinsäure, ε-Phthalimidoperoxycapronsäure (Phthalimidoperoxyhexansäure, PAP), o-Carboxybenzamidoperoxycapronsäure, N-Nonenylamidoperadipinsäure und N-Nonenylamidopersuccinate, und aliphatische und araliphatische Peroxydicarbonsäuren, wie 1,12-Diperoxycarbonsäure, 1,9-Diperoxyazelainsäure, Diperoxysebacinsäure, Diperoxybrassylsäure, die Diperoxyphthalsäuren, 2-Decyldiperoxybutan-1,4-disäure, N,N-Terephthaloyl-di(6-aminopercapronsäure) können eingesetzt werden.

Neben den Persauerstoffbleichmitteln können auch chlorhaltige Bleichmittel zum Einsatz kommen. Hier sind insbesondere das Natriumhypochlorit sowie die Natriumdichlorcyanursäure zu nennen.

Der Gehalt der Wasch- oder Reinigungsmittel an Bleichmittel kann 1 bis 40 Gew.-% und insbesondere 10 bis 20 Gew.-%, betragen, wobei vorteilhafterweise Perboratmonohydrat oder Percarbonat eingesetzt wird.

Um beim Waschen bei Temperaturen von 60 °C und darunter, und insbesondere bei der Wäschevorbehandlung eine verbesserte Bleichwirkung zu erreichen, können die Mittel auch Bleichaktivatoren enthalten. Als Bleichaktivatoren können insbesondere Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glycolurile, insbesondere 1,3,4,6-Tetraacetylglycoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- beziehungsweise iso-NOBS), acylierte Hydroxycarbonsäuren, wie Triethyl-O-acetylcitrat (TEOC), Carbonsäureanhydride, insbesondere Phthalsäureanhydrid, Isatosäureanhydrid und/oder Bernsteinsäureanhydrid, Carbonsäureamide, wie N-Methyldiacetamid, Glycolid, acylierte mehrwertige Alkohole, insbesondere Triacetin, Ethylenglycoldiacetat, Isopropenylacetat, 2,5-Diacetoxy-2,5-dihydrofuran und die aus den deutschen Patentanmeldungen DE 196 16 693 und DE 196 16 767 bekannten Enolester sowie acetyliertes Sorbitol und Mannitol beziehungsweise deren in der europäischen Patentanmeldung EP 0 525 239 beschriebene Mischungen (SORMAN), acylierte Zuckerderivate, insbesondere Pentaacetylglucose (PAG), Pentaacetylfructose, Tetraacetylxylose und Octaacetyllactose sowie acetyliertes, gegebenenfalls N-alkyliertes Glucamin beziehungsweise Gluconolacton, Triazol beziehungsweise Triazolderivate und/oder teilchenförmige Caprolactame und/oder Caprolactamderivate, bevorzugt N-acylierte Lactame, beispielsweise N-Benzoylcaprolactam und N-Acetylcaprolactam. Hydrophil substituierte Acylacetale und Acyllactame werden ebenfalls bevorzugt eingesetzt. Auch Kombinationen konventioneller Bleichaktivatoren können eingesetzt werden. Ebenso können Nitrilderivate wie Cyanopyridine, Nitrilquats, zum Beispiel N-Alkylammoniumacetonitrile, und/oder Cyanamidderivate eingesetzt werden. Bevorzugte Bleichaktivatoren sind Natrium-4-(octanoyloxy)-benzolsulfonat, n-Nonanoyl- oder Isononanoyloxybenzolsulfonat (n- beziehungsweise iso-NOBS), Undecenoyloxybenzolsulfonat (UDOBS), Natriumdodecanoyloxybenzolsulfonat (DOBS), Decanoyloxybenzoesäure (DOBA, OBC 10) und/oder Dodecanoyloxybenzolsulfonat (OBS 12), sowie N-Methylmorpholinum-acetonitril (MMA). Weitere im Rahmen der vorliegenden Anmeldung einsetzbare Bleichaktivatoren sind Verbindungen aus der Gruppe der kationischen Nitrile.

Der Bleichaktivator ist in den erfindungsgemäßen Wasch- und Reinigungsmitteln vorzugsweise in einer Menge von 0,01 bis 20 Gew.-%, vorzugsweise in einer Menge von 0,1 bis 15 Gew.-%, insbesondere in einer Menge von 1 bis 10 Gew.-%, vor allem in einer Menge von 2 bis 5 Gew.-%, bezogen auf die gesamte Zusammensetzung, enthalten.

Zusätzlich zu den konventionellen Bleichaktivatoren oder an deren Stelle können auch so genannte Bleichkatalysatoren enthalten sein. Bei diesen Stoffen handelt es sich um bleichverstärkende Übergangsmetallsalze beziehungsweise Übergangsmetallkomplexe. Als Übergangsmetalle kommen hierbei insbesondere Mn, Fe, Co, Ru, Mo, Ti, V oder Cu in unterschiedlichen Oxidationsstufen in Betracht. Als komplexierende Liganden sind insbesondere Guanidine, Aminophenole, Aminoxide, Salene, Saldimine, Heterocyclen vom Phenanthrolin-Typ, Lactame, monocyclische sowie querverbrückte polycyclische Polyazaalkane, Terpyridine, Dendrimere, Tetraamido-Liganden, Bis- und Tetrakis(pyridylmethyl)alkylamine, weitere N-haltige Heterocyclen, sekundäre Amine, Polyoxometallate sowie weitere mögliche Liganden in der Literatur beschrieben.

Insbesondere zu nennen sind Mn-, Fe-, Co-, Ru- oder Mo-Salenkomplexe oder -carbonylkomplexe sowie Mn-, Fe-, Co-, Ru-, Mo-, Ti-, V- und Cu-Komplexe mit N-haltigen Tripod-Liganden und Co-, Fe-, Cu- und Ru-Aminkomplexe.
Mit besonderem Vorzug werden Komplexe des Mangans in der Oxidationsstufe II, III, IV oder V eingesetzt, die vorzugsweise einen oder mehrere makrocyclische(n) Ligand(en) mit den Donorfunktionen N, NR, PR, O und/oder S enthalten. Vorzugsweise werden Liganden eingesetzt, die Stickstoff-Donorfunktionen aufweisen. Dabei ist es besonders bevorzugt, Bleichkatalysator(en) in den erfindungsgemäßen Mitteln einzusetzen, welche als makromolekularen Liganden 1,4,7-Trimethyl-1,4,7-triazacyclononan (Me-TACN), 1,4,7-Triazacyclononan (TACN), 1,5,9-Trimethyl-1,5,9-triazacyclododecan (Me-TACD), 2-Methyl-1,4,7-trimethyl-1,4,7-triazacyclononan (Me/Me-TACN) und/oder 2-Methyl-1,4,7-triazacyclononan (Me/TACN) enthalten. Geeignete Mangankomplexe sind beispielsweise [Mn^{III}2(µ-O)₁(µ-OAc)₂(TACN)₂](ClO₄)₂, [Mn^{III}Mn^{IV}(µ-O)₂(µ-OAc)₁(TACN)₂](BPh₄)₂, [Mn^{IV}₄(µ-O)₆(T ACN)₄](ClO₄)₄, [Mn^{III}₂(µ-O)₁(µ-OAc)₂(Me-TACN)₂](ClO₄)₂, [Mn^{III}Mn^{IV}(µ-O)₁(µ-OAc)₂(Me-TACN)₂](ClO₄)₃, [Mn^{IV}₂(µ-O)₃(Me-TACN)₂](PF₆)₂ und [Mn^{IV}₂(µ-O)₃(Me/Me-TACN)₂](PF₆)₂(OAc = OC(O)CH₃).

Bleichkatalysatoren können in üblichen Mengen, vorzugsweise in einer Menge bis zu 5 Gew.-%, insbesondere von 0,0025 Gew.-% bis 1 Gew.-% und besonders bevorzugt von 0,01 Gew.-% bis 0,25 Gew.-%, jeweils bezogen auf das Gesamtgewicht des Wasch- oder Reinigungsmittels, eingesetzt werden. In speziellen Fällen kann jedoch auch mehr Bleichkatalysator eingesetzt werden.

Erfindungsgemäße Wasch- oder Reinigungsmittel enthalten in der Regel einen oder mehrere Builder (Gerüststoffe), insbesondere Zeolithe, Silikate, Carbonate, organische Cobuilder und - wo keine ökologischen Gründe gegen ihren Einsatz sprechen - auch die Phosphate, letztere insbesondere in maschinellen Geschirrspülmitteln.

Zu nennen sind hier kristalline, schichtförmige Natriumsilicate der allgemeinen Formel NaMSiₓO_{2x+1·}yH₂O, wobei M Natrium oder Wasserstoff bedeutet, x eine Zahl von 1,6 bis 22, vorzugsweise 1,9 bis 4,0 und y eine Zahl von 0 bis 33, vorzugsweise von 0 bis 20 ist und bevorzugte Werte für x 2, 3 oder 4 sind. Bevorzugte kristalline Schichtsilicate der angegebenen Formel sind solche, in denen M für Natrium steht und x die Werte 2 oder 3 annimmt. Insbesondere sind sowohl β- als auch δ-Natriumdisilicate Na₂Si₂O_{5·}yH₂O bevorzugt. Im Handel befinden sich derartige Verbindungen beispielsweise unter der Bezeichnung SKS® (Firma Clariant). Einsetzbar sind auch amorphe Natriumsilikate mit einem Modul Na₂O : SiO₂ von 1:2 bis 1:3,3, vorzugsweise von 1:2 bis 1:2,8 und insbesondere von 1:2 bis 1:2,6, welche vorzugsweise löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/ Verdichtung oder durch Übertrocknung hervorgerufen worden sein. Im Rahmen dieser Erfindung wird unter dem Begriff "amorph" auch "röntgenamorph" verstanden. Dies heißt, dass die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, dass die Produkte mikrokristalline Bereiche der Größe 10 bis einige Hundert nm aufweisen, wobei Werte bis max. 50 nm und insbesondere bis max. 20 nm bevorzugt sind. Insbesondere bevorzugt sind verdichtete/kompaktierte amorphe Silikate, compoundierte amorphe Silikate und übertrocknete röntgenamorphe Silikate.

Auch Zeolithe können gegebenenfalls eingesetzt werden, insbesondere Zeolith A und/oder P. Als Zeolith P wird Zeolith MAP^{®} (Handelsprodukt der Firma Crosfield) besonders bevorzugt. Geeignet sind jedoch auch Zeolith X sowie Mischungen aus A, X und/oder P. Geeignete Zeolithe weisen eine mittlere Teilchengröße von weniger als 10 µm (Volumenverteilung; Messmethode: Coulter Counter) auf und enthalten vorzugsweise 18 bis 22 Gew.-%, insbesondere 20 bis 22 Gew.-% an gebundenem Wasser.

Selbstverständlich ist auch ein Einsatz der allgemein bekannten Phosphate als Buildersubstanzen möglich, sofern ein derartiger Einsatz nicht aus ökologischen Gründen vermieden werden sollte. Unter der Vielzahl der kommerziell erhältlichen Phosphate haben die Alkalimetallphosphate unter besonderer Bevorzugung von Pentanatrium- beziehungsweise Pentakaliumtriphosphat (Natriumbeziehungsweise Kaliumtripolyphosphat) in der Wasch- und Reinigungsmittel-Industrie die größte Bedeutung. Alkalimetallphosphate ist dabei die summarische Bezeichnung für die Alkalimetall-(insbesondere Natrium- und Kalium-) -Salze der verschiedenen Phosphorsäuren, bei denen man Metaphosphorsäuren (HPO₃)ₙ und Orthophosphorsäure H₃PO₄ neben höhermolekularen Vertretern unterscheiden kann. Die Phosphate vereinen dabei mehrere Vorteile in sich: Sie wirken als Alkaliträger, verhindern Kalkbeläge auf Maschinenteilen beziehungsweise Kalkinkrustationen in Geweben und tragen überdies zur Reinigungsleistung bei.

Als organische Cobuilder können in den erfindungsgemäßen Wasch- und Reinigungsmitteln insbesondere Polycarboxylate oder Polycarbonsäuren, polymere Polycarboxylate, Polyasparaginsäure, Polyacetale, gegebenenfalls oxidierte Dextrine, weitere organische Cobuilder (siehe unten) sowie Phosphonate eingesetzt werden.

Brauchbare organische Gerüstsubstanzen sind beispielsweise die Polycarbonsäuren, worunter solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, insbesondere Aminodicarbonsäuren, Aminotricarbonsäuren, Aminotetracarbonsäuren, wie beispielsweise Glutamin-N,N-diessigsäure (GLDA), Methylglycindiessigsäure (MGDA) und deren Derivate, Nitrilotriessigsäure (NTA), sofern ein derartiger Einsatz aus ökologischen Gründen nicht zu vermeiden ist, sowie Mischungen aus diesen. Neben den Säuren an sich können dabei auch ihre Salze, insbesondere die Natriumsalze eingesetzt werden; bevorzugte Salze sind die Citrate, Adipate, Succinate, Glutarate, Tartrate, die Salze der Zuckersäuren, die Salze der GLDA, die Salze der MGDA sowie Mischungen aus diesen. Die Säuren können hierbei auch zur Einstellung eines niedrigeren pH-Wertes dienen. Neben den bereits genannten Säuren können zu diesem Zweck beispielsweise auch Essigsäure, Milchsäure, Glykolsäure, Gluconsäure und Gemische derselben eingesetzt werden, aber auch Mineralsäuren wie Schwefelsäure. Daneben können auch Basen als pH-Regulatoren dienen, insbesondere Ammonium- oder Alkalimetallhydroxide. Derartige Regulatoren sind in den erfindungemäßen Mitteln in Mengen von vorzugsweise nicht über 20 Gew.-%, insbesondere von 1,2 Gew.-% bis 17 Gew.-%, enthalten.

Als organische Builder sind weiterhin polymere Polycarboxylate geeignet (organische Polymere mit einer Vielzahl an Carboxylatfunktionen im Makromolekül, insbesondere mit mehr als zehn Carboxylatfunktionen), dies sind beispielsweise die Alkalimetallsalze der Polyacrylsäure oder der Polymethacrylsäure, beispielsweise solche mit einer relativen Molekülmasse von 500 bis 70 000 g/mol, insbesondere Polyacrylate mit einer Molmasse von 2000 bis 20000 g/mol. Geeignet sind weiterhin copolymere Polycarboxylate, insbesondere solche der Acrylsäure mit Methacrylsäure und der Acrylsäure oder Methacrylsäure mit Maleinsäure. Zur Verbesserung der Wasserlöslichkeit können die Polymere weiterhin Allylsulfonsäuren, wie beispielsweise Allyloxybenzolsulfonsäure und Methallylsulfonsäure, als Monomer enthalten. Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol beziehungsweise Vinylalkohol-Derivate oder die als Monomere Salze der Acrylsäure und der 2-Alkylallylsulfonsäure sowie Zucker-Derivate enthalten. Weitere bevorzugte Copolymere sind solche, die als Monomere vorzugsweise Acrolein und Acrylsäure/Acrylsäuresalze beziehungsweise Acrolein und Vinylacetat aufweisen.

Als weitere bevorzugte Buildersubstanzen sind polymere Aminodicarbonsäuren, insbesondere Polyasparaginsäuren, sowie deren Salze oder deren Vorläufersubstanzen zu nennen, weiterhin Polyacetale, welche durch Umsetzung von Dialdehyden, vorzugsweise Glyoxal, Glutaraldehyd, Terephthalaldehyd sowie deren Gemischen, mit Polyolcarbonsäuren, welche 5 bis 7 C-Atome und mindestens 3 Hydroxylgruppen aufweisen, insbesondere Gluconsäure und/oder Glucoheptonsäure, erhalten werden können. Auch die Dextrine sind als geeignete organische Buildersubstanzen zu nennen.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate. Geeignete Einsatzmengen liegen in zeolith-, carbonat- und/oder silicathaltigen Formulierungen zwischen 3 und 15 Gew.-%.

Weitere brauchbare organische Cobuilder sind beispielsweise acetylierte Hydroxycarbonsäuren beziehungsweise deren Salze, welche gegebenenfalls auch in Lactonform vorliegen können und welche mindestens 4 Kohlenstoffatome und mindestens eine Hydroxygruppe sowie maximal zwei Säuregruppen enthalten.

Eine weitere Substanzklasse mit Cobuildereigenschaften stellen die Phosphonate dar. Dabei handelt es sich insbesondere um Hydroxyalkan- beziehungsweise Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z. B. als Hexanatriumsalz der EDTMP beziehungsweise als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Darüber hinaus können alle Verbindungen, die in der Lage sind, Komplexe mit Erdalkaliionen auszubilden, als Cobuilder eingesetzt werden.

Buildersubstanzen können in den erfindungsgemäßen Wasch- oder Reinigungsmitteln gegebenenfalls in Mengen bis zu 90 Gew.-% enthalten sein. Sie sind vorzugsweise in Mengen bis zu 75 Gew.-% enthalten. Erfindungsgemäße Waschmittel weisen Buildergehalte von insbesondere 5 Gew.-% bis 50 Gew.-% auf. In erfindungsgemäßen Mitteln für die Reinigung harter Oberflächen, insbesondere zur maschinellen Reinigung von Geschirr, beträgt der Gehalt an Buildersubstanzen insbesondere 5 Gew.-% bis 88 Gew.-%, wobei in derartigen Mitteln vorzugsweise keine wasserunlöslichen Buildermaterialien eingesetzt werden. In einer bevorzugten Ausführungsform erfindungsgemäßer Mittel zur insbesondere maschinellen Reinigung von Geschirr sind 20 Gew.-% bis 40 Gew.-% wasserlöslicher organischer Builder, insbesondere Alkalicitrat, 5 Gew.-% bis 15 Gew.-% Alkalicarbonat und 20 Gew.-% bis 40 Gew.-% Alkalidisilikat enthalten.

Lösungsmittel, die in den flüssigen bis gelförmigen Zusammensetzungen von Wasch- und Reinigungsmitteln eingesetzt werden können, stammen beispielsweise aus der Gruppe ein- oder mehrwertigen Alkohole, Alkanolamine oder Glycolether, sofern sie im angegebenen Konzentrationsbereich mit Wasser mischbar sind. Vorzugsweise werden die Lösungsmittel ausgewählt aus Ethanol, n- oder i-Propanol, Butanolen, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethyl-, -ethyl- oder -propyl-ether, Dipropylenglykolmonomethyl-, oder -ethylether, Di-isopropylenglykolmonomethyl-, oder -ethylether, Methoxy-, Ethoxy- oder Butoxytriglykol, 1-Butoxyethoxy-2-propanol, 3-Methyl-3-methoxybutanol, Propylen-glykol-t-butylether sowie Mischungen dieser Lösungsmittel.

Lösungsmittel können in den erfindungsgemäßen flüssigen bis gelförmigen Wasch- und Reinigungsmitteln in Mengen zwischen 0,1 und 20 Gew.-%, bevorzugt aber unter 15 Gew.-% und insbesondere unterhalb von 10 Gew.-% eingesetzt werden.

Zur Einstellung der Viskosität können der erfindungsgemäßen Zusammensetzung ein oder mehrere Verdicker, beziehungsweise Verdickungssysteme zugesetzt werden. Diese hochmolekularen Stoffe, die auch Quell(ungs)mittel genannt werden, saugen meist die Flüssigkeiten auf und quellen dabei auf, um schließlich in zähflüssige echte oder kolloide Lösungen überzugehen.

Geeignete Verdicker sind anorganische oder polymere organische Verbindungen. Zu den anorganischen Verdickern zählen beispielsweise Polykieselsäuren, Tonmineralien wie Montmorillonite, Zeolithe, Kieselsäuern und Bentonite. Die organischen Verdicker stammen aus den Gruppen der natürlichen Polymere, der abgewandelten natürlichen Polymere und der vollsynthetischen Polymere. Solche aus der Natur stammenden Polymere sind beispielsweise Agar-Agar, Carrageen, Tragant, Gummi arabicum, Alginate, Pektine, Polyosen, Guar-Mehl, Johannisbrotbaumkernmehl, Stärke, Dextrine, Gelatine und Casein. Abgewandelte Naturstoffe, die als Verdicker verwendet werden, stammen vor allem aus der Gruppe der modifizierten Stärken und Cellulosen. Beispielhaft seien hier Carboxymethylcellulose und andere Celluloseether, Hydroxyethyl- und -propylcellulose sowie Kernmehlether genannt. Vollsynthetische Verdicker sind Polymere wie Polyacryl- und Polymethacryl-Verbindungen, Vinylpolymere, Polycarbonsäuren, Polyether, Polyimine, Polyamide und Polyurethane.

Die Verdicker können in einer Menge bis zu 5 Gew.-%, vorzugsweise von 0,05 bis 2 Gew.-%, und besonders bevorzugt von 0,1 bis 1,5 Gew.-%, bezogen auf die fertige Zusammensetzung, enthalten sein.

Das erfindungsgemäße Wasch- und Reinigungsmittel kann gegebenenfalls als weitere übliche Inhaltsstoffe Sequestrierungsmittel, Elektrolyte und weitere Hilfsstoffe, wie optische Aufheller, Vergrauungsinhibitoren, Silberkorrosionsinhibitoren, Farbübertragungsinhibitoren, Schauminhibitoren, Abrasivstoffe, Farb- und/oder Duftstoffe, sowie mikrobielle Wirkstoffe, UV-Absorbenzien und/oder Enzymstabilisatoren enthalten.

Erfindungsgemäße Textilwaschmittel können als optische Aufheller Derivate der Diaminostilbendisulfonsäure beziehungsweise deren Alkalimetallsalze enthalten. Geeignet sind zum Beispiel Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, zum Beispiel die Alkalisalze des 4,4'-Bis(2-sulfostyryl)-diphenyls, 4,4'-Bis(4-chlor-3-sulfostyryl)-diphenyls, oder 4-(4-Chlorstyryl)-4'-(2-sulfostyryl)-diphenyls. Auch Gemische der vorgenannten optischen Aufheller können verwendet werden.

Vergrauungsinhibitoren haben die Aufgabe, den von der Textilfaser abgelösten Schmutz in der Flotte suspendiert zu halten. Hierzu sind wasserlösliche Kolloide meist organischer Natur geeignet, beispielsweise Stärke, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich andere als die obengenannten Stärkederivate verwenden, zum Beispiel Aldehydstärken. Bevorzugt werden Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, beispielsweise in Mengen von 0,1 bis 5 Gew.-%, bezogen auf die Mittel, eingesetzt.

Um einen Silberkorrosionsschutz zu bewirken, können in erfindungsgemäßen Reinigungsmitteln für Geschirr Silberkorrosionsinhibitoren eingesetzt werden. Solche sind aus dem Stand der Technik bekannt, beispielsweise Benzotriazole, Eisen(III)-chlorid oder CoSO₄. Wie beispielsweise aus der europäischen Patentschrift EP 0 736 084 B1 bekannt ist, sind für die gemeinsame Verwendung mit Enzymen besonders geeignete Silberkorrosionsinhibitoren Mangan-, Titan-, Zirkonium-, Hafnium-, Vanadium-, Cobalt- oder Cersalze und/oder -komplexe, in denen die genannten Metalle in einer der Oxidationsstufen II, III, IV, V oder VI vorliegen. Beispiele für derartige Verbindungen sind MnSO₄, V₂O₅, V₂O₄, VO₂, TiOSO₄, K₂TiF₆, K₂ZrF₆, Co(NO₃)₂, Co(NO₃)₃, sowie deren Gemische.

"Soil-Release"-Wirkstoffe oder "Soil-Repellents" sind zumeist Polymere, die bei der Verwendung in einem Waschmittel der Wäschefaser schmutzabstoßende Eigenschaften verleihen und/oder das Schmutzablösevermögen der übrigen Waschmittelbestandteile unterstützen. Ein vergleichbarer Effekt kann auch bei deren Einsatz in Reinigungsmitteln für harte Oberflächen beobachtet werden.

Besonders wirksame und seit langer Zeit bekannte Soil-Release-Wirkstoffe sind Copolyester mit Dicarbonsäure-, Alkylenglykol- und Polyalkylenglykoleinheiten. Beispiele dafür sind Copolymere oder Mischpolymere aus Polyethylenterephthalat und Polyoxyethylenglykol, Copolymere aus einer dibasigen Carbonsäure und einem Alkylen- oder Cycloalkylenpolyglykol, Polymere aus Ethylenterephthalat und Polyethylenoxid-terephthalat, Copolyester aus Ethylenglykol, Polyethylenglykol, aromatischer Dicarbonsäure und sulfonierter aromatischer Dicarbonsäure oder auch Methyl- oder Ethylgruppen-endverschlossene Polyester mit Ethylen- und/oder Propylenterephthalat- und Polyethylenoxid-terephthalat-Einheiten; daneben sind viele weitere Soil-release-Polymere in der Literatur bekannt und in erfindungsgemäßen Mitteln einsetzbar.

Zu den für den Einsatz in erfindungsgemäßen Textilwaschmitteln in Frage kommenden Farbübertragungsinhibitoren gehören insbesondere Polyvinylpyrrolidone, Polyvinylimidazole, polymere N-Oxide wie Poly-(vinylpyridin-N-oxid) und Copolymere von Vinylpyrrolidon mit Vinylimidazol.

Beim Einsatz in maschinellen Reinigungsverfahren kann es von Vorteil sein, den betreffenden Mitteln Schauminhibitoren zuzusetzen. Als Schauminhibitoren eignen sich beispielsweise Seifen natürlicher oder synthetischer Herkunft, die einen hohen Anteil an C₁₈-C₂₄-Fettsäuren aufweisen. Geeignete nichttensidartige Schauminhibitoren sind beispielsweise Organopolysiloxane und deren Gemische mit mikrofeiner, gegebenenfalls silanierter Kieselsäure sowie Paraffine, Wachse, Mikrokristallinwachse und deren Gemische mit silanierter Kieselsäure oder Bistearylethylendiamid. Mit Vorteilen werden auch Gemische aus verschiedenen Schauminhibitoren verwendet, zum Beispiel solche aus Silikonen, Paraffinen oder Wachsen. Vorzugsweise sind die Schauminhibitoren, insbesondere Silikon- und/oder Paraffin-haltige Schauminhibitoren, an eine granulare, in Wasser lösliche, beziehungsweise dispergierbare Trägersubstanz gebunden. Insbesondere sind dabei Mischungen aus Paraffinen und Bistearylethylendiamiden bevorzugt.

Ein erfindungsgemäßes Reinigungsmittel für harte Oberflächen kann darüber hinaus abrasiv wirkende Bestandteile, insbesondere aus der Gruppe umfassend Quarzmehle, Holzmehle, Kunststoffmehle, Kreiden und Mikroglaskugeln sowie deren Gemische, enthalten. Auch zerkleinerte Naturstoffe wie Obstkerne, Nussschalen oder Wurzelstücke lassen sich als Abrasiva einsetzen. Abrasivstoffe sind in den erfindungsgemäßen Reinigungsmitteln vorzugsweise in einer Menge von nicht mehr als 20 Gew.-%, insbesondere in einer Menge von 5 bis 15 Gew.-%, enthalten.

Farb- und Duftstoffe werden Wasch- und Reinigungsmitteln zugesetzt, um den ästhetischen Eindruck der Produkte zu verbessern und dem Verbraucher neben der Wasch- und Reinigungsleistung ein visuell und sensorisch typisches und unverwechselbares Produkt zur Verfügung zu stellen. Als Parfümöle beziehungsweise Duftstoffe können einzelne Riechstoffverbindungen, zum Beispiel die synthetischen Produkte vom Typ der Ester, Ether, Aldehyde, Ketone, Alkohole und Kohlenwasserstoffe verwendet werden. Riechstoffverbindungen vom Typ der Ester sind zum Beispiel Benzylacetat, Phenoxyethylisobutyrat, p-tert.-Butylcyclohexylacetat, Linalylacetat, Dimethylbenzyl-carbinylacetat, Phenylethylacetat, Linalylbenzoat, Benzylformiat, Ethylmethylphenyl-glycinat, Allylcyclohexylpropionat, Styrallylpropionat und Benzylsalicylat. Zu den Ethern zählen beispielsweise Benzylethylether, zu den Aldehyden zum Beispiel die linearen Alkanale mit 8-18 C-Atomen, Citral, Citronellal, Citronellyloxyacetaldehyd, Cyclamenaldehyd, Hydroxycitronellal, Lilial und Bourgeonal, zu den Ketonen zum Beispiel die Jonone, α-Isomethylionon und Methyl-cedrylketon, zu den Alkoholen Anethol, Citronellol, Eugenol, Geraniol, Linalool, Phenylethylalkohol und Terpineol, zu den Kohlenwasserstoffen gehören hauptsächlich die Terpene wie Limonen und Pinen. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, zum Beispiel Pine-, Citrus-, Jasmin-, Patchouly-, Rosen- oder Ylang-Ylang-Öl. Ebenfalls geeignet sind Muskateller, Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl. Üblicherweise liegt der Gehalt von Wasch- und Reinigungsmitteln an Farbstoffen unter 0,01 Gew.-%, während Duftstoffe bis zu 2 Gew.-% der gesamten Formulierung ausmachen können.

Die Duftstoffe können direkt in die Wasch- oder Reinigungsmittel eingearbeitet werden, es kann aber auch vorteilhaft sein, die Duftstoffe auf Träger aufzubringen, die die Haftung des Parfüms auf dem Reinigungsgut verstärken und durch eine langsamere Duftfreisetzung für langanhaltenden Duft, insbesondere von behandelten Textilien sorgen. Als solche Trägermaterialien haben sich beispielsweise Cyclodextrine bewährt, wobei die Cyclodextrin-Parfüm-Komplexe zusätzlich noch mit weiteren Hilfsstoffen beschichtet werden können. Ein weiter bevorzugter Träger für Duftstoffe ist der beschriebene Zeolith X, der anstelle von oder in Mischung mit Tensiden auch Duftstoffe aufnehmen kann. Bevorzugt sind daher Wasch- und Reinigungsmittel, die den beschriebenen Zeolith X und Duftstoffe, die vorzugsweise zumindest teilweise an dem Zeolithen absorbiert sind, enthalten.

Bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

Zur Bekämpfung von Mikroorganismen können Wasch- oder Reinigungsmittel antimikrobielle Wirkstoffe enthalten. Hierbei unterscheidet man je nach antimikrobiellem Spektrum und Wirkungsmechanismus zwischen Bakteriostatika und Bakteriziden, Fungistatika und Fungiziden usw. Wichtige Stoffe aus diesen Gruppen sind beispielsweise Benzalkoniumchloride, Alkylarylsulfonate, Halogenphenole und Phenolmercuriacetat. Die Begriffe antimikrobielle Wirkung und antimikrobieller Wirkstoff haben im Rahmen der erfindungsgemäßen Lehre die fachübliche Bedeutung, die beispielsweise von K. H. Wallhäußer in "Praxis der Sterilisation, Desinfektion - Konservierung : Keimidentifizierung - Betriebshygiene" (5. Aufl. - Stuttgart; New York : Thieme, 1995) wiedergegeben wird, wobei alle dort beschriebenen Substanzen mit antimikrobieller Wirkung eingesetzt werden können. Geeignete antimikrobielle Wirkstoffe sind vorzugsweise ausgewählt aus den Gruppen der Alkohole, Amine, Aldehyde, antimikrobiellen Säuren beziehungsweise deren Salze, Carbonsäureester, Säureamide, Phenole, Phenolderivate, Diphenyle, Diphenylalkane, Harnstoffderivate, Sauerstoff-, Stickstoff-acetale sowie -formale, Benzamidine, Isothiazoline, Phthalimidderivate, Pyridinderivate, antimikrobiellen oberflächenaktiven Verbindungen, Guanidine, antimikrobiellen amphoteren Verbindungen, Chinoline, 1,2-Dibrom-2,4-dicyanobutan, lodo-2-propyl-butyl-carbamat, Iod, lodophore, Peroxoverbindungen, Halogenverbindungen sowie beliebigen Gemischen der voranstehenden.

Weiterhin eignen sich halogenierte Xylol- und Kresolderivate, wie p-Chlormetakresol oder p-Chlormeta-xylol, sowie natürliche antimikrobielle Wirkstoffe pflanzlicher Herkunft (zum Beispiel aus Gewürzen oder Kräutern), tierischer sowie mikrobieller Herkunft.

Die antimikrobiellen Wirkstoffe werden in Mengen von 0,0001 Gew.-% bis 1 Gew.-%, bevorzugt von 0,001 Gew.-% bis 0,8 Gew.-%, besonders bevorzugt von 0,005 Gew.-% bis 0,3 Gew.-% und insbesondere von 0,01 bis 0,2 Gew.-% eingesetzt.

Die erfindungsgemäßen Wasch- oder Reinigungsmittel können UV-Absorbenzien (UV-Absorber) enthalten, die auf die behandelten Textilien aufziehen und die Lichtbeständigkeit der Fasern und/oder die Lichtbeständigkeit sonstiger Rezepturbestandteile verbessern. Unter UV-Absorber sind organische Substanzen (Lichtschutzfilter) zu verstehen, die in der Lage sind, ultraviolette Strahlen zu absorbieren und die aufgenommene Energie in Form längerwelliger Strahlung, zum Beispiel Wärme wieder abzugeben.

Verbindungen, die diese gewünschten Eigenschaften aufweisen, sind beispielsweise die durch strahlungslose Desaktivierung wirksamen Verbindungen und Derivate des Benzophenons mit Substituenten in 2- und/oder 4-Stellung. Weiterhin sind auch substituierte Benzotriazole, in 3-Stellung Phenylsubstituierte Acrylate (Zimtsäurederivate, gegebenenfalls mit Cyanogruppen in 2-Stellung), Salicylate, organische Ni-Komplexe sowie Naturstoffe wie Umbelliferon und die körpereigene Urocansäure geeignet. Besondere Bedeutung haben auch Biphenyl- und vor allem Stilbenderivate. Auch unlösliche Lichtschutzpigmente, nämlich feindisperse, vorzugsweise nanoisierte Metalloxide beziehungsweise Salze kommen in Frage, insbesondere Zinkoxid und Titandioxid und daneben Oxide des Eisens, Zirkoniums, Siliciums, Mangans, Aluminiums und Cers sowie deren Gemische, weiterhin können als Salze Silicate (Talk), Bariumsulfat oder Zinkstearat eingesetzt werden.

Die UV-Absorbenzien werden üblicherweise in Mengen von 0,01 Gew.-% bis 5 Gew.-%, vorzugsweise von 0,03 Gew.-% bis 1 Gew.-%, eingesetzt.

Erfindungsgemäße Mittel können zur Steigerung der Wasch- beziehungsweise Reinigungsleistung Enzyme enthalten, wobei prinzipiell alle im Stand der Technik für diese Zwecke etablierten Enzyme einsetzbar sind. Hierzu gehören insbesondere Proteasen, Amylasen, Lipasen, Hemicellulasen, Cellulasen, Hemicellulasen oder Oxidoreduktasen, sowie vorzugsweise deren Gemische. Diese Enzyme sind im Prinzip natürlichen Ursprungs; ausgehend von den natürlichen Molekülen stehen für den Einsatz in Wasch- und Reinigungsmitteln verbesserte Varianten zur Verfügung, die entsprechend bevorzugt eingesetzt werden. Erfindungsgemäße Mittel enthalten diese weiteren Enzyme vorzugsweise in Gesamtmengen von 1 x 10⁻⁶ bis 5 Gewichts-Prozent bezogen auf aktives Protein.

Erfindungsgemäßen Mitteln können die Enzyme in jeder nach dem Stand der Technik etablierten Form zugesetzt werden. Hierzu gehören beispielsweise die durch Granulation, Extrusion oder Lyophilisierung erhaltenen festen Präparationen oder, insbesondere bei flüssigen oder gelförmigen Mitteln, Lösungen der Enzyme, vorteilhafterweise möglichst konzentriert, wasserarm und/oder mit Stabilisatoren versetzt. Alternativ können diese Proteine sowohl für die feste als auch für die flüssige Darreichungsform auf einem festen Träger adsorbiert und/oder verkapselt werden, wozu alle im Stand der Technik bekannten Verfahren genutzt werden können; die Verkapselung kann sowohl zum Schutz der Enzyme (oder auch anderer Inhaltsstoffe) vor anderen Bestandteilen, beispielsweise Bleichmitteln, als auch zur kontrollierten Freisetzung (controlled release) der verkapselten Wirkstoffe dienen. Auch die Granulation ist zum Schutz der Enzyme und anderer sensitiver Wasch- oder Reinigungsmittelinhaltsstoffe wie beispielsweise Duftstoffe, optische Aufheller oder Bleichaktivatoren geeignet, weiterhin können zwei oder mehrere Enzyme zusammen konfektioniert werden, so dass ein einzelnes Granulat mehrere Enzymaktivitäten aufweist.

Einen zusätzlichen Schutz der Enzyme, beispielsweise vor der Denaturierung durch physikalische Einflüsse oder insbesondere auch vor einer proteolytischen Spaltung, bieten Enzymstabilisatoren, wozu beispielsweise Benzamidin-Hydrochlorid, Borax, Borsäuren, Boronsäuren oder deren Salze oder Ester zählen, darunter vor allem Derivate mit aromatischen Gruppen, etwa ortho-, meta- oder para-substituierte Phenylboronsäuren, insbesondere 4-Formylphenyl-Boronsäure, beziehungsweise die Salze oder Ester der genannten Verbindungen. Auch Peptidaldehyde, das heißt Oligopeptide mit reduziertem C-Terminus, insbesondere solche aus 2 bis 50 Monomeren, werden zu diesem Zweck eingesetzt, weiterhin Aminoalkohole wie Mono-, Di-, Triethanol- und -Propanolamin und deren Mischungen, aliphatische Carbonsäuren bis zu C₁₂, wie beispielsweise Bernsteinsäure, andere Dicarbonsäuren oder Salze der genannten Säuren, endgruppenverschlossene Fettsäureamidalkoxylate, niedere aliphatische Alkohole, vor allem Polyole, wie beispielsweise Glycerin, Ethylenglykol, Propylenglykol oder Sorbit, Di-Glycerinphosphat, Calcium- und/oder Magnesiumsalze wie beispielsweise Calciumacetat oder Calciumformiat oder auch Kaliumsalze, etwa Kaliumacetat. Bestimmte als Builder eingesetzte organische Säuren vermögen zusätzlich ein enthaltenes Enzym zu stabilisieren. Als polymere Stabilisatoren sind unter anderem zu nennen: Polyamid-Oligomere oder polymere Verbindungen wie Lignin, wasserlösliche Vinyl-Copolymere oder Cellulose-Ether, Acryl-Polymere und/oder Polyamide, lineare C₈-C₁₈ Polyoxyalkylene sowie Polyamin-N-Oxid-enthaltende Polymere, die gleichzeitig als Farbübertragungsinhibitoren fungieren.Reduktionsmittel und Antioxidantien erhöhen die Stabilität der Enzyme gegenüber oxidativem Zerfall; hierfür sind beispielsweise schwefelhaltige Reduktionsmittel geläufig. Andere Beispiele sind Natrium-Sulfit und reduzierende Zucker.Besonders bevorzugt werden Kombinationen von Stabilisatoren eingesetzt, beispielsweise aus Polyolen, Borsäure und/oder Borax, die Kombination von Borsäure oder Borat, reduzierenden Salzen und Bernsteinsäure oder anderen Dicarbonsäuren oder die Kombination von Borsäure oder Borat mit Polyolen oder Polyaminoverbindungen und mit reduzierenden Salzen. Die Wirkung von Peptid-Aldehyd-Stabilisatoren wird günstigerweise durch die Kombination mit Borsäure und/oder Borsäurederivaten und Polyolen gesteigert und noch weiter durch die zusätzliche Wirkung von zweiwertigen Kationen, wie zum Beispiel Calcium-Ionen.

Der Anteil der Enzyme, der Enzymflüssigformulierung(en) oder der Enzymgranulate in einem Wasch- oder Reinigungsmittel kann beispielsweise etwa 0,01 bis 5 Gew.-%, vorzugsweise 0,12 bis etwa 2,5 Gew.-% betragen.

Ein erfindungsgemäßes Reinigungsmittel, insbesondere ein erfindungsgemäßer Reiniger für harte Oberflächen, kann auch ein oder mehrere Treibmittel (INCI Propellants), üblicherweise in einer Menge von 1 bis 80 Gew.-%, vorzugsweise 1,5 bis 30 Gew.-%, insbesondere 2 bis 10 Gew.-%, besonders bevorzugt 2,5 bis 8 Gew.-%, äußerst bevorzugt 3 bis 6 Gew.-%, enthalten.

Treibmittel sind erfindungsgemäß üblicherweise Treibgase, insbesondere verflüssigte oder komprimierte Gase. Die Wahl richtet sich nach dem zu versprühenden Produkt und dem Einsatzgebiet. Bei der Verwendung von komprimierten Gasen wie Stickstoff, Kohlendioxid oder Distickstoffoxid, die im allgemeinen in dem flüssigen Reinigungsmittel unlöslich sind, sinkt der Betriebsdruck mit jeder Ventilbetätigung. Im Reinigungsmittel lösliche oder selbst als Lösungsmittel wirkende verflüssigte Gase (Flüssiggase) als Treibmittel bieten den Vorteil gleichbleibenden Betriebsdrucks und gleichmäßiger Verteilung, denn an der Luft verdampft das Treibmittel und nimmt dabei ein mehrhundertfaches Volumen ein.

Geeignet sind demgemäß folgende gemäß INCI bezeichnete Treibmittel: Butane, Carbon Dioxide, Dimethyl Carbonate, Dimethyl Ether, Ethane, Hydrochlorofluorocarbon 22, Hydrochlorofluorocarbon 142b, Hydrofluorocarbon 152a, Hydrofluorocarbon 134a, Hydrofluorocarbon 227ea, Isobutane, Isopentane, Nitrogen, Nitrous Oxide, Pentane, Propane. Auf Chlorfluorkohlenstoffe (Fluorchlorkohlenwasserstoffe, FCKW) als Treibmittel wird jedoch wegen ihrer schädlichen Wirkung auf den - vor harter UV-Strahlung schützenden - Ozon-Schild der Atmosphäre, die sogenannte Ozon-Schicht, vorzugsweise weitgehend und insbesondere vollständig verzichtet.

Bevorzugte Treibmittel sind Flüssiggase. Flüssiggase sind Gase, die bei meist schon geringen Drücken und 20°C vom gasförmigen in den flüssigen Zustand übergeführt werden können. Insbesondere werden unter Flüssiggasen jedoch die - in Ölraffinerien als Nebenprodukte bei Destillation und Kracken von Erdöl sowie in der Erdgas-Aufbereitung bei der Benzinabscheidung anfallenden - Kohlenwasserstoffe Propan, Propen, Butan, Buten, Isobutan (2-Methylpropan), Isobuten (2-Methylpropen, Isobutylen) und deren Gemische verstanden.

Besonders bevorzugt enthält das Reinigungsmittel als ein oder mehrere Treibmittel Propan, Butan und/oder Isobutan, insbesondere Propan und Butan, äußerst bevorzugt Propan, Butan und Isobutan.

In einer bevorzugten Ausführungsform ist das Mittel mit einem erfindungsgemäßen SBK-Polymer so konzipiert, dass es regelmäßig als Pflegemittel verwendet werden kann, beispielsweise indem es dem Waschprozess zugesetzt, nach dem Waschen angewendet oder unabhängig von dem Waschen appliziert wird. Der gewünschte Effekt besteht darin, das Wachstum und/oder die Adhäsion von Mikroorganismen zu verhindern und/oder zu vermindern.

Einen eigenen Erfindungsgegenstand stellen Verfahren zur maschinellen Reinigung von Textilien oder von harten Oberflächen dar, bei denen wenigstens in einem der Verfahrensschritte ein erfindungsgemäßes SBK-Polymer verwendet wird.

Hierunter fallen sowohl manuelle als auch maschinelle Verfahren, wobei maschinelle Verfahren aufgrund ihrer präziseren Steuerbarkeit, was beispielsweise die eingesetzten Mengen und Einwirkzeiten angeht, bevorzugt sind.

Verfahren zur Reinigung von Textilien zeichnen sich im allgemeinen dadurch aus, dass in mehreren Verfahrensschritten verschiedene reinigungsaktive Substanzen auf das Reinigungsgut aufgebracht und nach der Einwirkzeit abgewaschen werden, oder dass das Reinigungsgut in sonstiger Weise mit einem Waschmittel oder einer Lösung dieses Mittels behandelt wird. Das gleiche gilt für Verfahren zur Reinigung von allen anderen Materialien als Textilien, welche unter dem Begriff harte Oberflächen zusammengefasst werden. Alle denkbaren Wasch- oder Reinigungsverfahren können in wenigstens einem der Verfahrensschritte um erfindungsgemäße SBK-Polymere bereichert werden, und stellen dann Ausführungsformen der vorliegenden Erfindung dar.

Ein weiterer Gegenstand der vorliegenden Erfindung ist auch ein Erzeugnis, enthaltend eine erfindungsgemäße Zusammensetzung bzw. ein erfindungsgemäßes Wasch- oder Reinigungsmittel, insbesondere einen erfindungsgemäßen Reiniger für harte Oberflächen, und einen Sprühspender. Bei dem Erzeugnis kann es sich hierbei sowohl um ein Einkammer- als auch um ein Mehrkammerbehältnis, insbesondere ein Zweikammerbehältnis handeln. Bevorzugt ist der Sprühspender hierbei ein manuell aktivierter Sprühspender, insbesondere ausgewählt aus der Gruppe umfassend Aerosolsprühspender (Druckgasbehälter; auch u.a. als Spraydose bezeichnet), selbst Druck aufbauende Sprühspender, Pumpsprühspender und Triggersprühspender, insbesondere Pumpsprühspender und Triggersprühspender mit einem Behälter aus transparentem Polyethylen oder Polyethylenterephthalat. Sprühspender werden ausführlicher in der WO 96/04940 (Procter & Gamble) und den darin zu Sprühspendern zitierten US-Patenten, auf die in dieser Hinsicht sämtlich Bezug genommen und deren Inhalt hiermit in diese Anmeldung aufgenommen wird, beschrieben. Triggersprühspender und Pumpzerstäuber besitzen gegenüber Druckgasbehältern den Vorteil, dass kein Treibmittel eingesetzt werden muss. Durch geeignete, partikelgängige Aufsätze, Düsen etc. (sog. "nozzle-Ventile") auf dem Sprühspender kann das Enzym in dieser Ausführungsform gegebenenfalls auch in auf Partikeln immobilisierter Form dem Mittel beigefügt werden und so als Reinigungsschaum dosiert werden

Das nachfolgende Beispiel erläutert die Erfindung weiter, ohne sie darauf zu beschränken.

### Beispiel 1: Synthese der Stern-Block-Kammcopolymere

Vor dem Beginn wurden 0,12 ml m-Diisopropenylbenzol (DIPB) mit 0,5 ml Styrol unter Argon in einem kleinen Kolben vermischt. In einen auf-40 °C gekühlten, mit Tetrahydrofuran (THF) befüllten Reaktor wurden 0,8 ml des Initiators sek.-Butyllithium bei einer Rührgeschwindigkeit von ca. 1000 U/min gespritzt. Sofort trat eine Gelbfärbung ein. Anschließend wurde zügig das Gemisch aus DIPB und Styrol zugespritzt. Hierbei wurde nach einer kurzzeitigen Rotfärbung ein schneller Farbumschlag nach dunkelgrün bis schwarz beobachtet. Nach einer Reaktionszeit von 30 min wurden 9,91 ml Styrol zugespritzt. Der Ansatz färbte sich hierbei zunächst orange, dann tiefrot. Nach 3,5 Stunden wurde der Reaktor innerhalb von ca. 20 min. auf -70 °C gekühlt. Anschließend wurde die Rührgeschwindigkeit auf 3000 U/min gestellt und 4,6 ml 4-Vinylpyridin zugespritzt, wodurch sich das Reaktionsmedium schlagartig cremefarbig bis gelblich färbte. Der Reaktor wurde wieder auf -40 °C erwärmt und die Reaktion nach 12 Stunden terminiert, indem die Reaktionslösung über eine Überführungskanüle in Wasser eingeleitet wurde, wobei sich ein weißer gallertartiger Niederschlag bildete. Das Polymer-Wassergemisch wurde mit Hilfe eines Rotationsverdampfers eingeengt und anschließend über einen Büchnertrichter abfiltriert.

Das Produkt wird anschließend entweder durch Reaktion mit Methyliodid methyliert (a) oder aber mit α-Methoxy-ω-Mesyl-Polyethylenglykol umgesetzt (b).
(a) Zur Methylierung werden dabei 1 g des Polymers in 25 ml trockenem Chloroform gelöst und unter Argon für mindestens vier Stunden gerührt. Anschließend wurde die Lösung im Ölbad auf 40°C erwärmt und 4 ml Methyliodid zugegeben und die Reaktion 1,5 h unter Rückfluss bei 40°C durchgeführt. Die nach etwa fünf Minuten eintretende Gelbfärbung verstärkte sich hierbei mit zunehmender Zeit. Anschließend wurde noch etwa 60 Stunden bei Raumtemperatur gerührt und danach die Reaktion am Rotationsverdampfer eingeengt, wobei eventuell nicht umgesetztes Methyliodid durch etwa 10 ml Triethylamin im Auffangkolben des Rotationsverdampfers abgefangen wurde. Schließlich wurde das Polymer mit Diethylether ausgefällt und abfiltriert.
(b) Zur Umsetzung mit α-Methoxy-ω-Mesyl-Polyethylenglykol wurde 1 g des Polymers in einem 50 ml-Rundkolben vorgelegt und entweder 3,95 g 2000- α-Methoxy-ω-Mesyl-Polyethylenglykol oder 4 g 5000- α-Methoxy-ω-Mesyl-Polyethylenglykol hinzugegeben. Anschließend wurden 35 ml N,N-Dimethylacetamid (DMAC) zugegeben und auf 110° C erwärmt, so dass sich die Edukte lösen und miteinander reagieren konnten. Nach sechs Stunden wurde das restliche DMAC am Rotationsverdampfer abgezogen.

## Patentansprüche

1. Stern-Block-Kamm-Polymer (SBK-Polymer), **dadurch gekennzeichnet, dass** es einen hydrophoben Bereich aus einem hyperverzweigten Kern und einem aufgepfropften hydrophoben Block sowie einen hydrophilen Bereich aus an diesen Block durch nachträgliche Modifizierung angebrachte Seitenketten aus hydrophilem Polymer umfasst.

2. SBK-Polymer nach Anspruch 1, **dadurch gekennzeichnet, dass** der hydrophobe Kern Silikongruppen oder einen hydrophoben Kohlenwasserstoff, der gegebenenfalls auch Heteroatome enthalten kann, umfasst.

3. SBK-Polymer nach Anspruch 1 oder 2, **dadurch gekennzeichnet, dass** der hydrophobe Kern aromatische Reste C₆₋₁₀-Aryl enthält.

4. SBK-Polymer nach einem der Ansprüche 1 bis 3, **dadurch gekennzeichnet, dass** der hydrophobe Bereich ein im Kern hyperverzweigtes Polystyrolsternpolymer ist.

5. SBK-Polymer nach einem der vorstehenden Ansprüche, **dadurch gekennzeichnet, dass** es sich bei dem aufgepfropften hydrophoben Block um einen Block aus monomeren Einheiten handelt, die eine Gruppe mit quaternisierbarem oder ternisierbarem Heteroatom umfasst.

6. SBK-Polymer nach einem der vorstehenden Ansprüche, **dadurch gekennzeichnet, dass** der aufgepfropfte hydrophobe Block ein Polyvinylpyridin ist.

7. SBK-Polymer nach einem der vorstehenden Ansprüche, **dadurch gekennzeichnet, dass** der hydrophile, antimikrobiell und/oder anti-adhäsiv wirksame Bereich durch zumindest teilweises Quaternisieren oder Ternisieren der im aufgepfropften Block befindlichen Heteroatome gebildet wird.

8. SBK-Polymer nach Anspruch 6, **dadurch gekennzeichnet, dass** der hydrophile, antimikrobiell und/oder anti-adhäsiv wirksame Bereich durch Aufpfropfen von Methoxy-Polyethylenglykol-Polymeren auf ein Poly-4-Vinylpyridin erhalten wird.

9. SBK-Polymer nach einem der vorstehenden Ansprüche, **dadurch gekennzeichnet, dass** es sich um ein wasserlösliches Molekül handelt.

10. SBK-Polymer nach einem der vorstehenden Ansprüche, **dadurch gekennzeichnet, dass** es einen Wirkstoff nicht-kovalent gebunden enthält.

11. SBK-Polymer nach Anspruch 10, **dadurch gekennzeichnet, dass** der Wirkstoff ausgewählt ist aus Bioziden, Farbstoffen und Duftstoffen.

12. Verfahren zur Herstellung eines antimikrobiell und/oder anti-adhäsiv wirksamen Stern-Block-Kamm-Polymers, umfassend die Schritte:
a) Herstellung eines hyperverzweigten Kerns,
b) Umsetzung der Verbindung gemäß (a) mit Monomeren, die organisch gebundenen Stickstoff, Phosphor oder Schwefel enthalten, vorzugsweise mit 4-Vinylpyridin,
c) Quaternisierung bzw. Ternisierung des Produkts aus (b) durch Umsetzung mit einem Alkylierungs-Reagens, wobei es sich bei dem Alkylierungs-Reagens vorzugsweise um ein Alkylhalogenid, insbesondere um ein Alkylchlorid, -bromid oder-iodid, besonders bevorzugt um ein C₁₋₆-Alkylhalogenid, vor allem um ein C₁₋₄-Alkylhalogenid, handelt, oder durch Umsetzung mit PEG-Derivaten, insbesondere mit α-Methoxy-ω-Mesyl-PEG.

13. Verwendung von SBK-Polymeren nach einem der Ansprüche 1 bis 11 zur Behandlung und/oder antimikrobiellen und/oder anti-adhäsiven Ausrüstung von Oberflächen.

14. Verwendung von SBK-Polymeren nach einem der Ansprüche 1 bis 11 in einem Reinigungsmittel, in einem Haarbehandlungsmittel oder einem Zahnbehandlungsmittel.

15. Verwendung von SBK-Polymeren nach einem der Ansprüche 1 bis 11 als Carrier für Wirkstoffe.

16. Zusammensetzung ausgewählt aus der Gruppe bestehend aus Reinigungsmitteln, Haarbehandlungsmitteln und Zahnbehandlungsmitteln, enthaltend SBK-Polymere nach einem der Ansprüche 1 bis 11.

17. Zusammensetzung nach Anspruch 16, **dadurch gekennzeichnet, dass** die SBK-Polymere in einer Menge von bis zu 20 Gew.-% in der Zusammensetzung enthalten sind.

18. Zusammensetzung nach einem der Ansprüche 16 oder 17, **dadurch gekennzeichnet, dass** sie zusätzlich Tenside, insbesondere ausgewählt aus anionischen, nichtionischen, amphoteren und zwitterionischen Tensiden, enthält.

19. Zusammensetzung nach einem der Ansprüche 16 bis 18, **dadurch gekennzeichnet, dass** sie mindestens eine weitere Komponente enthält, ausgewählt aus der Gruppe bestehend aus Säuren, alkalischen Substanzen, Buildern, Bleichmitteln, Hydrotropen, Lösungsmitteln, Verdickungsmitteln, Farbstoffen, Parfums, Korrosionsinhibitoren, Sequestriermitteln, Elektrolyten, optischen Aufhellern, Vergrauungsinhibitoren, Silberkorrosionsinhibitoren, Farbübertragungsinhibitoren, Schauminhibitoren, Abrasivstoffen, UV-Absorbenzien, Lösungsmitteln, Abrasivstoffen, Antistatika, Perlglanzmitteln, Enzymen und Hautschutzmitteln.

20. Zusammensetzung nach einem der Ansprüche 16 bis 19, **dadurch gekennzeichnet, dass** es sich um eine feste, gelförmige, pastöse oder flüssige Zusammensetzung handelt.

21. Erzeugnis enthaltend SBK-Polymere nach einem der Ansprüche 1 bis 11 oder eine Zusammensetzung nach einem der Ansprüche 16 bis 20 und einen Sprühspender zur Dosierung der Zusammensetzung als Aerosol und/oder als Schaum.

22. Verfahren zur semipermanenten antimikrobiellen und/oder anti-adhäsiven Ausrüstung von Oberflächen, **dadurch gekennzeichnet, dass** die Oberfläche mit einem SBK-Polymer nach einem der Ansprüche 1 bis 11 oder mit einer Zusammensetzung nach einem der Ansprüche 16 bis 20 behandelt wird.
